# EUROPÄISCHE PATENTANMELDUNG

(11) **EP 2 166 259 A1**
(43) Veröffentlichungstag der Anmeldung: **24.03.2010**
(21) Anmeldenummer: 08164600.2
(22) Anmeldetag: 18.09.2008
(51) Int. Cl.: F16J 15/44, F01D 11/00

(54) **Vorrichtung zum Abdichten eines Lagergehäuses eines Abgasturboladers**

(71) Anmelder: ABB Turbo Systems AG, 5400 Baden (CH)
(72) Erfinder: Bochud, Dominique, CH-5403, Wettingen (CH); Gwehenberger, Tobias, CH-4310, Rheinfelden (CH); Schlienger, Joel, CH-8008, Zürich (CH); Häge, Christoph, CH-5430, Wettingen (CH)
(74) Vertreter: ABB Patent Attorneys

(57) **Zusammenfassung**

Die Vorrichtung dient dem Abdichten eines Lagergehäuses (4) eines Abgasturboladers, aus dem ein Rotor (R) in einen mit einem Massenstrom belasteten Raum des Laders geführt ist. Die Vorrichtung weist einen in einer Nut (22) des Rotors angeordneten Dichtungsring (5) auf, einen auf dem Lagergehäuse (4) angeordneten Sitz (43), auf dem der vorgespannte Dichtungsring (5) mit einer nach aussen weisenden Mantelfläche festgesetzt ist, sowie einen ringförmig um die Drehachse des Rotors geführten, radial erstreckten Trennungsspalt, der von zwei aufeinanderliegenden Gleitflächen begrenzt ist, von denen die erste auf einer ersten Stirnseite (51) des Dichtungsrings (5) und die zweite auf einer ersten Flanke (21) der Nut (22) angeordnet ist.

Um beim Betrieb des Abgasturboladers durch Anschleifen des Dichtungsrings (5) verursachten Wärmeeintrag in den Dichtungsring (5) zu reduzieren, ist in die zweite Flanke (23) der Nut (22) oder in eine an die zweite Flanke (23) der Nut (22) führbare zweite Stirnseite (52) des Dichtungsrings (5) ein Profil eingeformt, welches der Reduktion der Grösse einer Anschleiffläche dient, die beim Anschlagen des Dichtungsrings (5) an die zweite Nutflanke (23) entsteht.

## Beschreibung

### Technisches Gebiet

Die Erfindung bezieht sich auf das Gebiet von Abgasturboladern.
Sie betrifft eine Vorrichtung zum Abdichten eines Lagergehäuses eines Abgasturboladers nach dem Oberbegriff von Patentanspruch 1 sowie einen Abgasturbolader nach Anspruch 10 mit einer solchen Vorrichtung.

Bei einem Abgasturbolader werden die Abgase einer Brennkraftmaschine zur Verdichtung für die der Brennkraftmaschine zugeführte Verbrennungsluft genutzt. Dazu weist der Turbolader einen Rotor mit einer Turbine und einen Verdichter auf, die auf einer gemeinsamen Welle des Rotors sitzen. Die Abgase der Brennkraftmaschine werden in der Turbine entspannt und in Drehenergie umgewandelt. Die gewonnene Drehenergie wird mittels der Welle auf den Verdichter übertragen, welcher die der Brennkraftmaschine zugeführte Luft verdichtet. Durch die Verwendung der Energie der Abgase zur Verdichtung der dem Verbrennungsprozess in der Brennkraftmaschine zugeführte Luft können der Verbrennungsprozess und die Energieausbeute der Brennkraftmaschine optimiert werden.

Ein Abschnitt des Rotors ist in einem Lagergehäuse auf Axial- und Radiallagern drehbar geführt, welche Lager mit einem Schmiermittel, insbesondere Öl, geschmiert werden. Um ein Austreten des Schmiermittels in Richtung Turbine oder Verdichter zu verhindern, ist der im Lagergehäuse gelagerte Abschnitt des Rotors über zwei Dichtungen aus dem Lagergehäuse geführt, von denen die eine das Lagergehäuse in Richtung Turbine und die andere in Richtung Verdichter abdichtet.

Die Abdichtung des Schmiermittel aufnehmenden Lagergehäuses des Abgasturboladers hin zur Turbinenwelle kann mit einem als Kolbenring ausgeführten Dichtungsring erfolgen, der mit axialem und radialem Spiel in einer um die Drehachse des Rotors geführten, ringförmigen Nut des Rotors angeordnet ist und mit Vorspannung in einen Sitz des Lagergehäuse eingeklemmt ist. Je nach Anforderung können auch zwei und mehr Dichtungsringe vorgesehen sein, welche im allgemeinen ebenfalls jeweils als Kolbenring ausgebildet und mit Vorspannung in weitere Sitze des Gehäuses eingeklemmt sind. Durch den Druckunterschied zwischen dem Abgasmassenstrom, welcher die Turbine antreibt, und dem Druck im Schmiermittelraum des Lagergehäuses kommt es im Betrieb des Turboladers zu einer Verschiebung des Dichtungsrings und damit zu einem Einschleifen dieses Rings in der ringförmigen Nut in Richtung des Verdichters. Durch dieses Einschleifen wird die Dichtigkeit des Lagergehäuses verbessert. Das Einschleifen des Dichtungsrings erfolgt solange, bis dieser Ring an einer umlaufenden Kante im Sitz des Lagergehäuses ansteht.

### Stand der Technik

Eine Vorrichtung zum Abdichten des Lagergehäuses eines Abgasturboladers der vorgenannten Art ist beschrieben in EP 1 507 106 B1. Diese Vorrichtung weist einen als Kolbenring ausgeführten Dichtungsring mit zwei Bereichen aus unterschiedlichen Materialien auf, wobei der erste Bereich aus einem weichen, leicht abschleifbaren Material gefertigt ist und eine Gleitfäche aufweist, die mit einem Rotor des Laders zusammenwirkt, und ein zweiter Bereich aus einem hochwarmfesten Material gefertigt ist. Ein solcher Dichtungsring hat den Vorteil, dass er mit dem Bereich aus hochwarmfestem Material die zum Verklemmen des Dichtungsrings in einem Lagergehäuse des Laders geforderte Radialvorspannung dauerhaft ermöglicht und gleichzeitig mit dem Bereich aus weichem, leicht abschleifbarem Material den gewünschten Einschleifprozess zwischen Dichtungsring und Rotor optimal unterstützt.

### Kurze Darstellung der Erfindung

Der Erfindung, wie sie in den Ansprüchen 1 bis 10 definiert ist, liegt die Aufgabe zugrunde, eine Vorrichtung zum Abdichten eines Lagergehäuses eines Abgasturboladers der eingangs genannten Art sowie einen Abgasturbolader mit einer solchen Vorrichtung zu schaffen, welche sich auch unter erschwerten Betriebsbedingungen des Laders durch grosse Zuverlässigkeit und eine hohe Lebensdauer auszeichnen.

Bei der als Dichtung wirkenden Vorrichtung nach der Erfindung ist in eine der Turbine des Abgasturboladers zugewandte Flanke einer Nut oder in eine an diese Flanke der Nut führbare zweite Stirnseite eines Dichtungsrings ein Profil eingeformt, welches der Reduktion der Grösse einer Anschleiffläche dient, die beim Anschlagen des Dichtungsrings an der zweiten Nutflanke entsteht. Die reduzierte Anschleiffläche hält den Wärmeeintrag in den Dichtungsring klein. Wärmeeintrag in den Dichtungsring kann entstehen, wenn der Dichtungsring an der turbinenseitigen Flanke der auf einem Rotor des Laders angebrachten Nut anschlägt und hierbei durch einen Schleifprozess Reibungswärme vom Rotor über die beim Anschlagen gebildete Anschleiffläche in den Dichtungsring eingetragen wird. Ein Anschlagen des Dichtungsrings an der turbinenseitigen Nutflanke ist möglich, wenn der Druck eines Abgase einer Brennkraftmaschine enthaltenden Massenstroms auf der Turbinenseite des Abgasturboladers geringer ist als der Druck im Lagergehäuse, wie dies bei einer im Leerlauf betriebenen Brennkraftmaschine der Fall ist. Dadurch, dass die Anschleiffläche klein gehalten ist, wird die Reibung zwischen dem Rotor und dem Dichtungsring reduziert und lediglich eine geringe Wärmemenge in den Dichtungsring eingetragen, wodurch eine zusätzliche Belastung des Dichtungsrings vermieden wird.

Weitere Vorteile der Erfindung ergeben sich aus den abhängigen Ansprüchen.

### Kurze Beschreibung der Zeichnungen

Nachfolgend sind anhand von Figuren Ausführungsbeispiele der Vorrichtung zum Abdichten des Lagergehäuses des Abgasturboladers nach der Erfindung schematisch dargestellt und näher erläutert. In allen Figuren sind gleichwirkende Elemente mit gleichen Bezugszeichen versehen. Es zeigt:
- Fig. 1: eine Aufsicht auf einen axial geführten Schnitt durch einen Abgasturbolader, in dem eine umrandet dargestellte und als Dichtung wirkende Vorrichtung nach der Erfindung eingebaut ist,
- Fig. 2: in vergrösserter Darstellung eine erste Ausführungsform der in Fig.1 umrandet dargestellten Dichtung vor Beginn eines Einschleifprozesses,
- Fig. 3: die Dichtung nach Fig. 2 im Betriebszustand nach Abschluss des Einschleifprozesses,
- Fig. 4 bis 8: vergrössert dargestellt jeweils eine von fünf weiteren Ausführungsformen der Dichtung nach Fig.1,
- Fig. 9: eine Aufsicht von rechts auf einen als Kolbenring ausgeführten Dichtungsring vor dem Einbau in die Dichtung nach Fig.6, und
- Fig.10: eine Aufsicht in Pfeilrichtung auf einen längs X - X geführten Schnitt durch den Dichtungsring gemäss Fig.9.

### Weg zur Ausführung der Erfindung

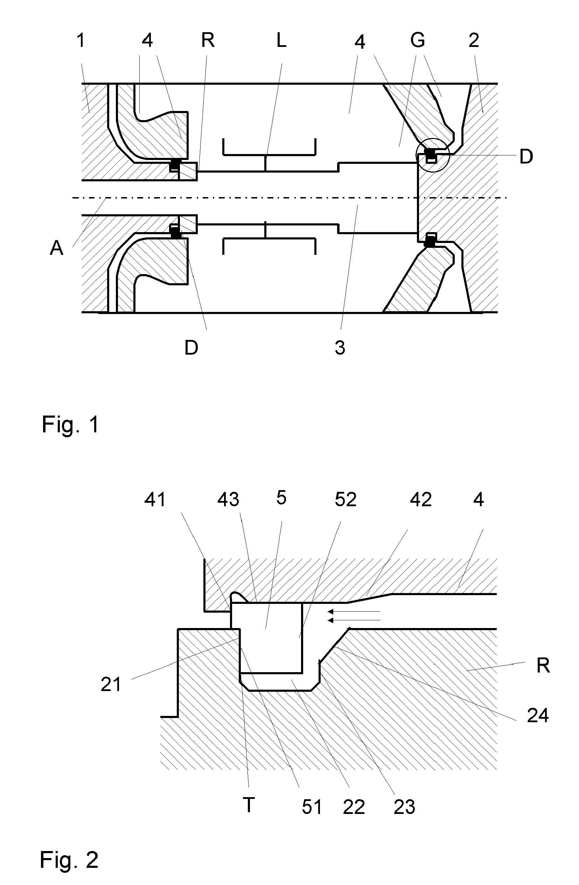

Fig. 1 zeigt schematisch eine Teilansicht eines Abgasturboladers mit einem feststehend angeordneten Gehäuse G und einem um eine Achse A drehbaren Rotor R. Auf der linken Seite des Rotors R ist ein auf einer Welle 3 befestigtes Verdichterrad 1 eines Abgasturboladers angedeutet. Die Welle 3 wiederum ist mit einem Turbinenrad 2 des Abgasturboladers auf der rechten Seite verbunden. Das Turbinenrad 2 umfasst nicht dargestellte Schaufeln, über die es von einem in einem Verbrennungsmotor erzeugten Abgasstrom angetrieben wird. Das Verdichterrad umfasst ebenfalls nicht dargestellte Schaufeln.

Im Bereich zwischen den beiden Rädern sind lediglich schematisch dargestellte Axial- und Radiallager L angeordnet, welche die bei der Führung des Rotors R auftretenden axialen und radialen Kräfte aufnehmen.

Das Gehäuse G umschliesst den Rotor R und weist ein als feststehendes Lagergehäuse ausgebildetes Gehäuseteil 4 auf, welches die Axial- und Radiallager L und einen Abschnitt des Rotors R aufnimmt und gegenüber verbleibenden Gehäuseteilen abschirmt, in denen das mit dem heissen Abgas belastete Turbinenrad 2 der Abgasturbine und das zum Verdichten von Luft vorgesehene Verdichterrad 1 angeordnet sind. Die Axial- und Radiallager L werden so vor Abgas oder Druckluft enthaltenden Massenströmen geschützt, die jeweils hohen Druck, hohe Temperatur und hohe Geschwindigkeit aufweisen. Damit diese Massenströme nicht im Lagergehäuse 4 wirken können und zudem auch kein Schmieröl aus dem Lagergehäuse 4 entweichen kann, sind zwischen dem Lagergehäuse 4 und dem Rotor R zwei ringförmig um die Drehachse A geführte Dichtungen D angeordnet, von denen sich die eine an einem Abschnitt des Lagergehäuses 4 befindet, durch den der Rotor in den Verdichter geführt ist, und die andere an einem Abschnitt des Lagergehäuses, durch den der Rotor in die Abgasturbine geführt ist.

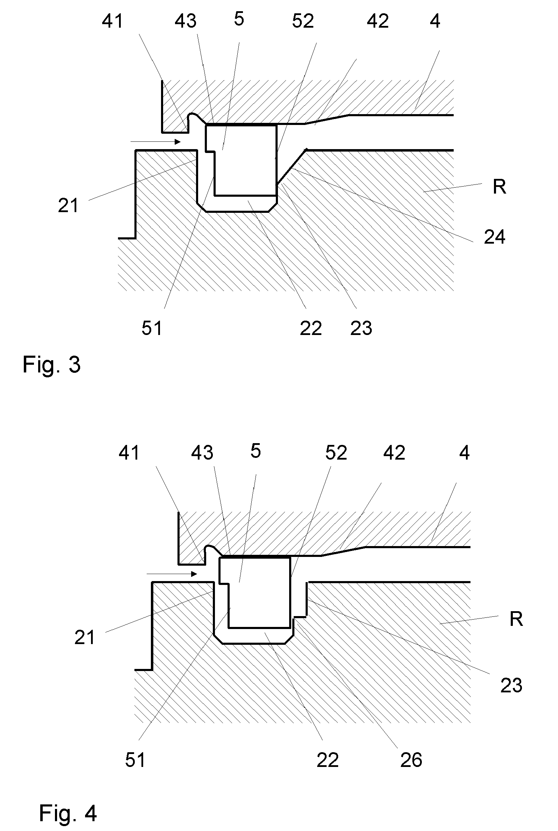

Eine erste Ausführungsform einer turbinenseitig angeordneten Dichtung D ist in den Figuren 2 und 3 schematisch dargestellt. Diese Dichtung umfasst einen Dichtungsring 5, der in einer ringförmig um die Drehachse laufenden Nut 22 des Rotors R angeordnet und als Kolbenring ausgebildet ist. Der Dichtungsring 5 und die Nut 22 weisen längs der Drehachse geschnitten jeweils vorwiegend rechteckigen Querschnitt auf. Die Dichtung D umfasst ferner einen auf dem Lagergehäuse 4 angeordneten Sitz 43, auf der der Dichtungsring mit einer nach aussen weisenden Mantelfläche weitgehend gas- und flüssigkeitsdicht festgesetzt ist, und einen ringförmig um die Drehachse des Rotors R geführten, radial erstreckten Trennungsspalt T, der von zwei aufeinanderliegenden Gleitflächen begrenzt ist. Die eine Gleitfläche ist auf einer Stirnseite 51 des Dichtungsrings 5 angeordnet, die andere auf einer Flanke 21 der Nut 22. Die aufeinanderliegenden Gleitflächen und der sehr schmale Trennungsspalt T verhindern das Eindringen des Abgasmassenstroms ins Lagergehäuse 4 und das Austreten von Öl aus dem Lagergehäuse 4. Zugleich ermöglichen sie eine Drehung des Rotors R, ohne dass sich der am Lagergehäuse 4 festgesetzte Dichtungsring 5 infolge Gleitreibung in unzulässiger Weise erwärmt.

Der im allgemeinen metallene Dichtungsring 5 wird bei der Montage mit Spiel in die Nut 22 eingebracht. Anschliessend wird ein das Turbinenrad 2 umfassender Abschnitt des Rotors R von rechts in axialer Richtung in das Lagergehäuse 4 eingeschoben. Da sich das Gehäuse 4 entlang dem Einschubweg an einer oder mehreren Stellen 42 oder aber kontinuierlich verengt, wird der Dichtungsring 5 mit radialer Vorspannung beaufschlagt und schliesslich am Sitz 43 im Lagergehäuse 4 verklemmt.

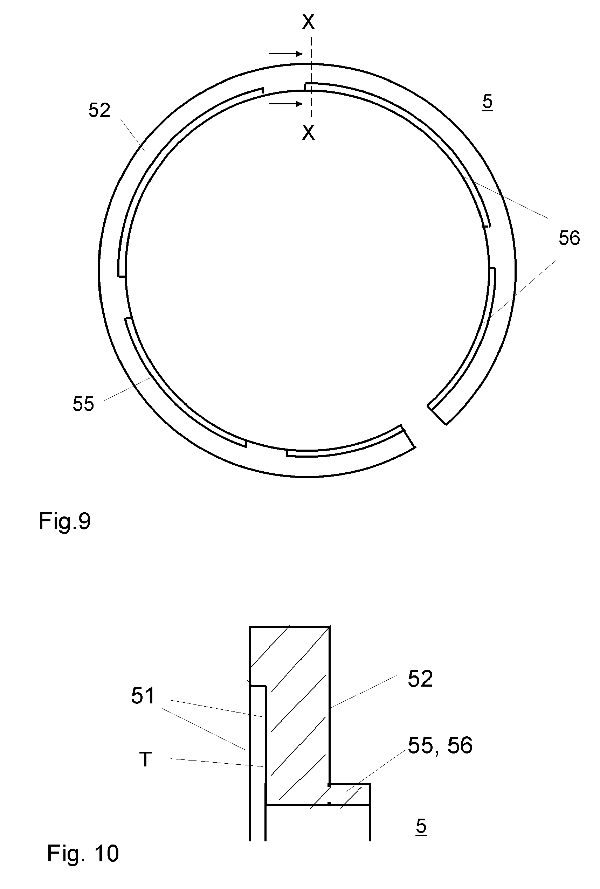

Bei der ersten Inbetriebnahme der Dichtung D, kommt es im Trennungsspalt T zu einem Einschleifprozesses. Der am Lagergehäuse 4 festgesetzte Dichtungsring 5 wird dabei durch den in Fig. 2 mit Pfeilen angedeuteten hohen Druck des Abgasmassenstroms gegen die rotierende Flanke 21 der Nut 22 gepresst und von dieser wie von einer Schleifscheibe abgeschliffen. Aus Fig. 10 ist ersichtlich wie dann in die gestrichelt dargestellte, ehemals plane Stirnfläche 51 des Dichtungsrings eine ringförmige Vertiefung eingeschliffen ist mit der den Trennspalt T nach rechts begrenzenden Gleitfläche.

Um zu verhindern, dass der Dichtungsring 5 nach Abschluss des Einschleifprozesses bei fortlaufendem Betrieb zu tief abgeschliffen oder gar durchgescheuert ist, ist am Lagergehäuse 4 ein Axialanschlag 41 vorgesehen. Der Axialanschlag begrenzt die axiale Verschiebbarkeit des Dichtungsrings 5 und verbessert so die Dichtwirkung der Dichtung D. Im Betriebszustand des Turboladers findet somit bei hohem Druck des Abgasmassenstroms im Bereich des Trennspalts T keine Kraftübertragung in axialer Richtung statt. Der in Pfeilrichtung gerichteten Kraft auf den Dichtungsring 5 wird vom Axialanschlag 41 entgegengewirkt.

Bei der Montage des Rotors R mit dem vormontierten Dichtungsring 5 kann es vorkommen, dass der Dichtungsring 5 an einer der Abgasturbine zugewandten Flanke 23 der Nut 22 anliegt. Bei geringem Druck des Abgasmassenstroms, insbesondere bei Motorleerlauf, kann dies zum Einschleifen des Dichtungsrings auf seiner mit dem Bezugszeichen 52 gekennzeichneten Stirnfläche führen, was zu einem zusätzlichen Wärmeeintrag beiträgt. Eine hierbei auftretende Anschleiffläche ist durch die Grösse der aufeinanderliegenden und mit Gleitreibung belasteten ringförmigen Flächenabschnitte von Stirnfläche 52 und Flanke 23 bestimmt.

Um den Wärmeeintrag zu begrenzen, ist in die Flanke 23 der Nut 22 oder in die Stirnseite 52 des Dichtungsrings 5 ein Profil eingeformt. Dieses Profil dient der Reduktion der Grösse der Anschleiffläche und damit auch der Reduktion der durch Gleitreibung beim Schleifprozess gebildeten und in den Dichtungsring 5 eingetragenen Wärmemenge.

Wie aus Fig.3 ersichtlich ist, weist das Profil eine in die Flanke 23 der Nut 22 eingeformte Anschrägung 24 auf, welche an die Oberfläche des Rotors R geführt ist. Beim Anschlagen des Dichtungsrings 5 an die Nutflanke 23 entsteht so - verglichen mit einer Dichtung ohne ein solches Profil - eine reduzierte Anschleiffläche. Wegen dieser kleinen Anschleiffläche wird auch bei geringem Abgasmassenstrom der Wärmeeintrag in den Dichtungsring 5 reduziert und in entsprechender Weise dessen Lebensdauer erhöht.

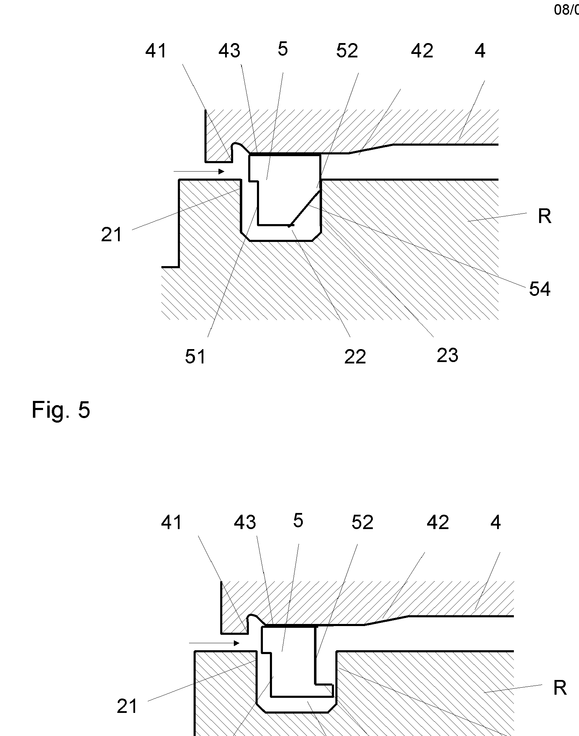

Bei der Ausführungsform nach Fig.4 werden die kleine Anschleiffläche und damit auch der geringe Wärmeeintrag in den Dichtungsring 5 dadurch erreicht, dass das Profil eine in die Flanke 23 der Nut 22 eingeformte Stufe 26 aufweist, deren Höhe lediglich einen Bruchteil der Höhe der Nutflanke 23, beispielsweise etwa die Hälfte dieser Höhe, beträgt, während dies bei der Ausführungsform nach Fig.5 durch ein Profil erreicht wird, welches eine in die zweite Stirnseite 52 des Dichtungsrings eingeformte und in der Nut 22 angeordnete Anschrägung 54 aufweist.

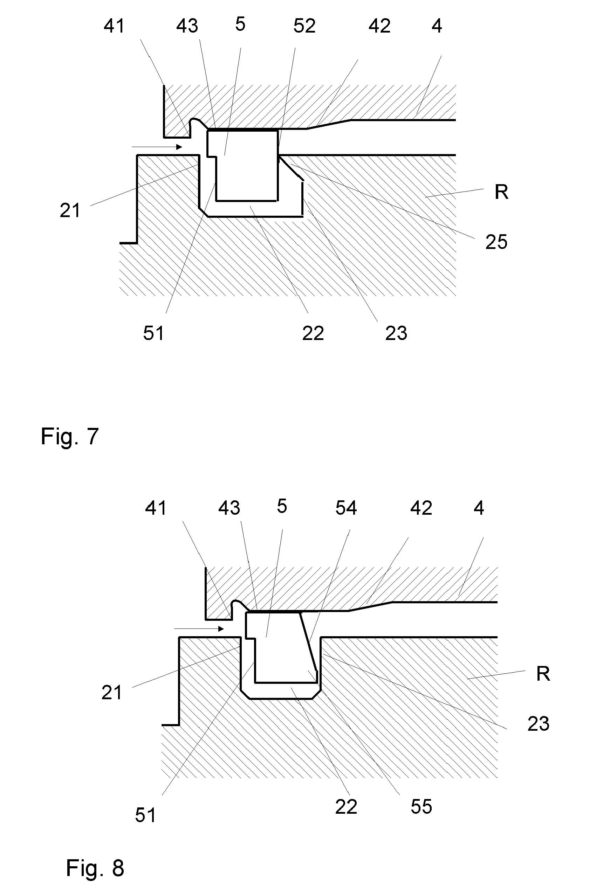

Bei den Ausführungsformen nach den Figuren 6 bis 8 werden eine kleine Anschleiffläche und ein geringer Wärmeeintrag in den Dichtungsring 5 durch ein Profil erreicht, welches mindestens eine um die Drehachse A des Rotors R geführte Kante 25 (Fig.7) resp. 55 (Figuren 6 und 8) aufweist, die nach Art einer Nase in die Nut 22 ragt. Wie aus den Ausführungsformen nach den Figuren 6 und 8 ersichtlich ist, ist die in die Stirnseite 52 des Dichtungsrings 5 eingeformte Kante 55 achsnah angeordnet. Dadurch wird eine gute Zentrierung des Kolbenrings 5 erzielt und zugleich ein Aufsitzen des Dichtungsrings 5 auf dem Rotor R mit Sicherheit vermieden. Bei der Ausführungsform nach Fig.7 wird die gleiche Wirkung dadurch erreicht, dass die in die Flanke 23 der Nut 22 eingeformte Kante 25 achsfern angeordnet ist.

Die Kante 55 resp. 25 ist in fertigungstechnisch vorteilhafter Weise im allgemeinen unterbrechungsfrei um die Drehachse des Rotors R geführt, kann aber auch von Absätzen gebildet sein, die im Umfangsrichtung voneinander mit Abstand angeordnet sind. Solche mit dem Bezugszeichen 56 gekennzeichnete Absätze sind aus Fig.9 ersichtlich. Sie reduzieren die Anschleiffläche zusätzlich und sorgen so dafür, dass der Wärmeintrag in Dichtungsring zusätzlich verringert wird.

Anstelle nur einer Kante kann das Profil auch zwei oder mehr Kanten enthalten, die im wesentlich koaxial angeordnet und voneinander jeweils durch eine um die Achse A geführte Vertiefung getrennt sind.

Anstelle nur eines Dichtungsrings 5 kann die Dichtung D auch weitere Dichtungsringe 5 aufweisen, die in zusätzlichen Nuten angeordnet und am Lagergehäuse 4 festgesetzt sind.

Dichtungen nach der Erfindung können sowohl an der turbinen- als auch an der verdichterseitigen Lagergehäusedurchführung des Rotors vorgesehen sein. Wenn die Anforderungen an den Turbolader dies zulassen, kann eine Dichtung nach der Erfindung nur turbinenseitig verwendet werden, während die verdichterseitige Rotordurchführung mit einer Dichtung nach dem Stand der Technik abgedichtet werden kann.

### Bezugszeichenliste

- A: Drehachse
- D: Dichtung
- G: Gehäuse
- L: Axial- und Radiallager
- R: Rotor
- T: Trennungsspalt,
- 1: Verdichterrad
- 2: Turbinenrad
- 21: Nutflanke
- 22: Nut
- 23: Nutflanke
- 24: Anschrägung
- 25: Kante
- 26: Stufe
- 3: Welle
- 4: Lagergehäuse
- 41: Axialanschlag
- 42: Radialverengung
- 43: Sitz
- 5: Dichtungsring
- 51, 52: Stirnflächen
- 54: Anschrägung
- 55: Kante
- 56: Absätze

## Patentansprüche

1. Vorrichtung (D) zum Abdichten eines Lagergehäuses (4) eines Abgasturboladers, aus dem ein Rotor (R) in einen mit einem Massenstrom belasteten Raum des Laders geführt ist, umfassend einen in einer Nut (22) des Rotors (R) angeordneten Dichtungsring (5), einen auf dem Lagergehäuse (4) angeordneten Sitz (43), auf dem der vorgespannte Dichtungsring (5) mit einer nach aussen weisenden Mantelfläche festgesetzt ist, und einen ringförmig um die Drehachse (A) des Rotors geführten, radial erstreckten Trennungsspalt (T), der von zwei aufeinanderliegenden Gleitflächen begrenzt ist, von denen die erste auf einer ersten Stirnseite (51) des Dichtungsrings (5) und die zweite auf einer ersten Flanke (21) der Nut (22) angeordnet ist, **dadurch gekennzeichnet, dass** in die zweite Flanke (23) der Nut (22) oder in eine an die zweite Flanke (23) der Nut (22) führbare zweite Stirnseite (52) des Dichtungsrings (5) ein Profil eingeformt ist, welches der Reduktion der Grösse einer Anschleiffläche dient, die beim Anschlagen des Dichtungsrings (5) an die zweite Nutflanke (23) entsteht.

2. Vorrichtung nach Anspruch 1, **dadurch gekennzeichnet, dass** das Profil mindestens eine um die Drehachse (A) des Rotors (R) geführte Kante (25, 55) aufweist, die nach Art einer Nase in die Nut (22) ragt.

3. Vorrichtung nach Anspruch 2, **dadurch gekennzeichnet, dass** die in die zweite Stirnseite (52) des Dichtungsrings (5) eingeformte Kante (55) achsnah angeordnet.

4. Vorrichtung nach Anspruch 2, **dadurch gekennzeichnet, dass** die in die zweite Flanke (23) der Nut (22) eingeformte Kante (25) achsfern angeordnet ist.

5. Vorrichtung nach einem der Ansprüche 2 bis 4, **dadurch gekennzeichnet, dass** die Kante (55, 25) unterbrechungsfrei um die Drehachse (A) des Rotors geführt ist.

6. Vorrichtung nach einem der Ansprüche 2 bis 4, **dadurch gekennzeichnet, dass** die Kante (55) von Absätzen (56) gebildet ist, die in Umfangsrichtung voneinander mit Abstand angeordnet sind.

7. Vorrichtung nach Anspruch 1, **dadurch gekennzeichnet, dass** das Profil eine in die zweite Stirnseite (52) des Dichtungsrings (5) eingeformte und in der Nut (22) angeordnete Anschrägung (54) aufweist.

8. Vorrichtung nach Anspruch 1, **dadurch gekennzeichnet, dass** das Profil eine in die zweite Flanke (23) der Nut (22) eingeformte und an die Oberfläche des Rotors (R) geführte Anschrägung (24) aufweist.

9. Vorrichtung nach Anspruch 1, **dadurch gekennzeichnet, dass** das Profil eine in die zweite Flanke (23) der Nut (22) eingeformte Stufe (26) aufweist.

10. Abgasturbolader mit einer Vorrichtung (D) nach einem der Ansprüche 1 bis 9, **dadurch gekennzeichnet, dass** die den Dichtungsring (5) aufnehmende Nut (22) an einem ein Turbinenrad (2) tragenden Abschnitt des Rotors (R) angeordnet ist.
